# EUROPÄISCHE PATENTSCHRIFT

(11) **EP 2 461 455 B1**
(45) Veröffentlichungstag und Bekanntmachung des Hinweises auf die Patenterteilung: **08.08.2018**
(21) Anmeldenummer: 11191899.1
(22) Anmeldetag: 05.12.2011
(51) Int. Cl.: H02J 3/38

(54) **Photovoltaikanlage**
Photovoltaic device
Installation photovoltaïque

(30) Priorität: 03.12.2010 DE 202010016207 U
(43) Veröffentlichungstag der Anmeldung: 06.06.2012
(73) Patentinhaber: SMA Solar Technology AG, 34266 Niestetal (DE)
(72) Erfinder: Lenz, Thomas, 61352 Bad Homburg (DE); Knaup, Dr. Peter, 64673 Zwingeberg (DE)
(74) Vertreter: Lahnor, Peter

(56) Entgegenhaltungen:
- EP-A1- 1 047 179
- US-A1- 2010 052 425

## Beschreibung

Die vorliegende Erfindung betrifft eine Photovoltaikanlage, die in einem gedrosselten Arbeitspunkt treibbar ist, sowie ein entsprechendes Verfahren zum Betreiben einer solchen Photovoltaikanlage.

Photovoltaikanlagen werden in zunehmendem Maße verwendet um elektrische Leistung aus Sonneneinstrahlung zu erzeugen, um diese dann in ein elektrisches Netz einzuspeisen, aus dem angeschlossene elektrische Verbraucher versorgt werden. Ein solches elektrisches Netz wird üblicherweise von einem sogenannten Netzbetreiber, auch Energieversorger genannt, betrieben, der die ordnungsgemäße Funktion des Netzes sicherstellen soll, insbesondere dass die elektrische Spannung des Netzes und die Frequenz der Spannung in klar definierten Grenzen liegen. Der Netzbetreiber kann den Betreiber der Photovoltaikanlage zwingen, weniger Leistung ins Netz einzuspeisen, als aufgrund der momentan vorherrschenden Sonneneinstrahlung möglich wäre. Die Photovoltaikanlage wird dann entsprechend dieser Vorgabe gedrosselt betrieben. Aufgrund von Verträgen und/oder gesetzlichen Vorgaben kann der Betreiber der Photovoltaikanlage aber einen Ausgleich für die entgangenen Einnahmen fordern, die durch diese gedrosselte Einspeisung bedingt sind.

Hierfür muss die Leistung bestimmt werden, die optimalerweise aufgrund der jeweils aktuell vorherrschenden Sonneneinstrahlung erzeugbar wäre.

Eine Möglichkeit besteht darin, die vorherrschende momentane Sonneneinstrahlung zu messen und daraus die optimaler weise, also maximal erzeugbare elektrische Leistung zu berechnen. Solche Verfahren können aber ungenau sein, weil sie Temperaturverhalten der Anlage und weitere Randbedingungen nur ungenau berücksichtigen. Auch kann die Messstelle, also der Aufstellungsort eines Sensors zur Messung der Sonneneinstrahlung möglicherweise nicht repräsentativ für die gesamte Photovoltaikanlage sein.

Weiterhin ist es bekannt, eine Referenzzelle zu verwenden, die die maximale elektrische Leistung erzeugt, die aufgrund der momentan vorherrschenden Sonneneinstrahlung mit dieser Referenzzelle erzeugbar ist. Aus der mit der Referenzzelle maximal erzeugten elektrischen Leistung wird dann auf die mit der gesamten Photovoltaikanlage maximal erzeugbare elektrische Leistung hochgerechnet. Auch hier stellt sich das Problem, dass solche Hochrechnungen ungenau sein können. Insbesondere ist zu berücksichtigen, dass Referenzzellen sich schon aufgrund ihrer Dimensionierung von der gesamten Photovoltaikanlage unterscheiden und auch andere Charakteristika aufweisen können, selbst wenn eine möglichst repräsentative Referenzzelle bezogen auf die Photovoltaikanlage ausgewählt wird. Auch hier kann der Aufstellungsort der Referenzelle im Verhältnis zum Aufstellungsort der Photovoltaikanlage, der sich regelmäßig über einen großen Bereich erstreckt, einen Einfluss haben und zu Ungenauigkeiten führen.

Der vorliegenden Erfindung liegt somit die Aufgabe zugrunde, wenigstens eines der oben genannten Probleme zu adressieren. Insbesondere soll eine Lösung geschaffen werden, bei der möglichst zuverlässig und genau die maximal erzeugbare elektrische Leistung einer Photovoltaikanlage bestimmt wird, wenn die Photovoltaikanlage in einem gedrosselten Arbeitspunkt betrieben wird. Zumindest soll eine alternative Ausführung vorgeschlagen werden. Dokument US 2010/052425 A1 zeigt eine Photovoltaik-Anlage mit einer Referenzeinheit, mittels derer bewirkt wird, dass die Photovoltaik-Anlage stets im maximalen Arbeitspunkt betrieben wird.

Erfindungsgemäß wird eine Photovoltaikanlage nach Anspruch 1 vorgeschlagen. Weiterhin wird ein Verfahren gemäß Anspruch 10 bereitgestellt.

Eine solche Photovoltaikanlage ist dazu vorbereitet, in der Leistung gedrosselt betrieben zu werden. Hierzu weist sie beispielsweise eine Eingangsschnittstelle auf, mit der ein solcher gedrosselter Wert der Photovoltaikanlage übermittelt werden kann. Abhängig von einem solchen oder anderen Vorgabewert kann die Photovoltaikanlage dann gezielt so betrieben werden, dass sie nur diese reduzierte elektrische Leistung erzeugt.

Weiterhin ist eine Referenzeinheit vorgesehen, die als Teil der Photovoltaikanlage angesehen werden kann. Diese Referenzeinheit kann als Referenzwechselrichter mit zugeordnetem Solargenerator ausgebildet sein und einen Beitrag zur insgesamt erzeugten elektrischen Leistung liefern. Die Referenzeinheit kann aber auch nur oder im Wesentlichen zum Messen oder Auswerten vorgesehen sein, ohne selbst elektrische Leistung in das Netz einzuspeisen. Die Referenzeinheit kann auch als Leistungsteil, wie beispielsweise Hochsetzsteller oder sogenannter MPP-Tracker (Maximum Power Point Tracker bzw. Einheit zum Verfolgen eines maximalen Betriebspunktes) ausgebildet sein.

Dabei ist die Referenzeinheit zum Betreiben in einem maximalen Arbeitspunkt der Referenzeinheit vorbereitet. Die Referenzeinheit kann also zumindest zeitweise so betrieben werden, dass sie gemäß der momentan vorherrschenden Sonneneinstrahlung die maximale elektrische Leistung erzeugt. Dabei ist die gesamte Photovoltikanlage so ausgebildet, dass die übrige Photovoltaikanlage in einem gedrosselten Arbeitspunkt betrieben wird, in dem weniger elektrische Leistung erzeugt und damit ins Netz eingespeist wird, als aufgrund der momentan vorherrschenden Sonneneinstrahlung möglich wäre. Wenn der verbleibende Teil der Photovoltaikanlage gedrosselt ist, ist entsprechend auch die gesamte Photovoltaikaanlage gedrosselt.

Die Referenzeinheit ist nun weiter dazu vorbereitet, ihren Arbeitspunkt in einem mit dem gedrosselten Arbeitspunkt der Photovoltaikanlage korrespondierenden gedrosselten Vergleichsarbeitspunkt zu verändern. Das kann beispielsweise so erfolgen, dass die Referenzeinheit proportional gleich reduziert wird. Umfasst die Photovoltaikanlage beispielsweise zehn identische Solargenerator-Wechselrichtereinheiten, von denen eine die Referenzeinheit bildet und alle diese Einheiten gleich dimensioniert sind, so kann jede dieser Einheiten mit einem Zehntel der elektrischen Leistung betrieben werden, die vom Netzbetreiber als maximal einzuspeisende Leistung zu dem konkreten Zeitpunkt vorgesehen ist.

Die Photovoltaikanlage ist nun dazu eingerichtet, einen Leistungszusammenhang der im maximalen Arbeitspunkt der Referenzeinheit erzeugbaren elektrischen Leistung und der im Vergleichsarbeitspunkt der Referenzeinheit erzeugbaren elektrischen Leistung zu bestimmen. Hieraus kann schließlich auf die maximal erzeugbare Leistung der gesamten Photovoltaikanlage und damit den Verlust durch den gedrosselten Betrieb geschlossen werden. Dies soll an einem Beispiel erläutert werden.

In dem Beispiel zur Erläuterung umfasst eine Photovoltaikanlage insgesamt zehn gleiche Einheiten, die jeweils einen Solargenerator und einen damit gekoppelten Wechselrichter aufweisen. Der jeweilige Wechselrichter ist dazu vorgesehen, elektrische Leistung aus dem jeweiligen Solargenerator in das elektrische Netz einzuspeisen. Einer der zehn Einheiten fungiert als Referenzeinheit und wird kurzzeitig in einem maximalen Arbeitspunkt betrieben, bei dem sich herausstellt, dass maximal 2 kW elektrische Leistung mit dieser Referenzeinheit erzeugbar sind. Gibt der Netzbetreiber eine maximal einzuspeisende Leistung von 10 kW vor, so werden alle Einheiten jeweils mit 1 kW betrieben. Dies gilt auch für die Referenzeinheit, die nur kurzfristig mit den maximal erzielbaren 2 kW betrieben wurde. Nun stellt sich für die Referenzeinheit heraus, dass diese in ihrem maximalen Arbeitspunkt die doppelte Leistung, nämlich 2 kW statt 1 kW erzeugten konnte und entsprechend wird von einem Faktor 2 zwischen der gedrosselten Leistung und der maximal erzeugbaren Leistung ausgegangen. Die gesamte Photovoltaikanlage könnte also im Maximalfall bei der momentan vorherrschenden Sonneneinstrahlung 20 kW elektrische Leistung erzeugen, darf aber nur 10 kW elektrische Leistung erzeugen. Diese Differenzleistung von 10kW - oder auch das Verhältnis, das auch als "performance ratio" bezeichnet werden könnte - kann für eine Ausgleichsberechnung für eine entgangene Vergütung verwendet werden.

Somit wird zumindest eine der Einheiten der Photovoltaikanlage zumindest kurzzeitig in einem tatsächlich möglichen maximalen Arbeitspunkt betrieben und es ist daher eine recht zuverlässige Aussage über das Verhältnis zwischen reduzierter und maximal möglicher Leistung möglich.

Es wird - alternativ oder zusätzlich - vorgeschlagen, dass die Photovoltaikanlage dazu vorbereitet ist, den Vergleichsarbeitspunkt der Referenzeinheit basierend auf einem vorab bestimmten Zusammenhang zwischen der Referenzeinheit und der Photovoltaikanlage zu bestimmen. Dies ist insbesondere vorteilhaft, wenn als Referenzeinheit ein Solargenerator mit Wechselrichter verwendet wird und diese Referenzeinheit allein zu Referenzzwecken betrieben wird und keinen Beitrag zur elektrischen Leistung der Photovoltaikanlage, also zu der von der Photovoltaikanlage in das Netz einzuspeisenden elektrischen Leistung liefert. Zunächst wird ein Zusammenhang zwischen der Referenzeinheit und der Photovoltaikanlage aufgenommen. Insbesondere wird die Referenzeinheit zeitgleich mit der Photovoltaikanlage jeweils ihre Kennlinie durchfahren. Unter der Kennlinie ist hier jene Kennlinie beschrieben, auf der sich die möglichen Arbeitspunkte der Referenzeinheit als auch der Photovoltaikanlage befinden, nämlich eine spannungsabhängige Stromkennlinie. Beide Kennlinien werden gleichzeitig durchfahren und dabei eine Zuordnung der Kennlinien untereinander gespeichert. Dabei werden die Kennlinien normiert, nämlich jeweils hinsichtlich des Stromes auf den Kurzschlussstrom und hinsichtlich der Spannung auf die Leerlaufspannung der Referenzeinheit bzw. des Photovoltaikmoduls. Hierdurch ergibt sich eine Referenzkennlinie, die der Kennlinie der Photovoltaikanlage zugeordnet ist. Diese Informationen werden abgespeichert und die Photovoltaikanlage ist entsprechend dazu vorbereitet, eine solche Abspeicherung vorzunehmen und auf diese Informationen zuzugreifen.

Im Betrieb der Photovoltaikanlage wird diese gemäß der Vorgabe des Netzbetreibers oder aus anderen Gründen nur gedrosselt betrieben. Damit stellt sich ein Arbeitspunkt auf der Kennlinie der Photovoltaikanlage ein. Dieser Arbeitspunkt kann einem korrespondierenden Arbeitspunkt der Referenzkennlinie aufgrund des zuvor aufgenommenen und abgespeicherten Zusammenhangs zugeordnet werden. Der Vergleichsarbeitspunkt der Referenzeinheit ist somit aus dem vorab bestimmten Zusammenhang bestimmt. Hierzu ist die Photovoltaikanlage vorbereitet, insbesondere ist sie entsprechend programmiert.

Die Referenzeinheit selbst wird aber in ihrem maximalen Arbeitspunkt betrieben und somit ist die maximal erzeugbare Leistung und im Übrigen auch der zugehörige konkrete Arbeitspunkt auf der Kennlinie bekannt. Es ist somit die mit der Referenzeinheit maximal erzeugbare elektrische Leistung als auch die in dem Vergleichsarbeitspunkt gedrosselt erzeugbare elektrische Leistung bekannt und daraus kann unmittelbar das Verhältnis erzeugte zu erzeugter Leistung bestimmt werden. Dieses Verhältnis ist aufgrund der Abgleichung beider Kennlinien, nämlich der Referenzkennlinie und der Kennlinie der Photovoltaikanlage auch als repräsentativ für das Verhältnis zwischen maximal erzeugbarer und aktuell erzeugter Leistung der Photovoltaikanlage insgesamt anzusehen. Entsprechend lässt sich auch die absolute Leistungsdifferenz der Photovoltaikanlage zwischen erzeugter und maximal erzeugbarer Leistung bestimmen.

Gemäß einer Ausführungsform umfasst die Referenzeinheit wenigstens einen ersten Wechselrichter und es ist wenigstens ein weiterer Wechselrichter vorgesehen, der zeitweise in einem maximalen Arbeitspunkt betrieben wird, während der erste Wechselrichter in dem gedrosselten Vergleichsarbeitspunkt betrieben wird. So wird zu einem Zeitpunkt bzw. zu einem kurzen Zeitraum eine Referenzeinheit vorübergehend in ihrem maximalen Arbeitspunkt betrieben und zu einem weiteren Zeitpunkt ein weiterer Wechselrichter, der insoweit auch als weitere Referenzeinheit oder Teil einer weiteren Referenzeinheit angesehen werden kann. Somit wird zu unterschiedlichen Zeiten zumindest jeweils ein Wechselrichter zeitweise in dem maximalen Arbeitspunkt und damit zeitweise nicht in dem reduzierten Arbeitspunkt betrieben. Auch für diesen weiteren Wechselrichter kann nun ein Verhältnis zwischen maximalem Arbeitspunkt und reduziertem bzw. gedrosseltem Vergleichsarbeitspunkt aufgestellt werden.

Es werden also für unterschiedliche Teile der Photovoltaikanlage solche Verhältnisse zwischen maximaler Leistung und gedrosselter Leistung aufgestellt. Aus diesen Informationen kann - beispielsweise durch Mittelwertbildung oder gewichtete Mittelwertbildung - eine möglicherweise genauere Abschätzung des Verhältnisses zwischen gedrosselter Leistung und maximal erzeugbarer Leistung der Photovoltaikanlage bei der momentan vorherrschenden Sonneneinstrahlung bestimmt werden. Optional sind weitere Wechselrichter vorgesehen, von denen jeweils wenigstens einer der Wechselrichter zeitweise in einem maximalen Arbeitspunkt betrieben wird, während die übrigen Wechselrichter jeweils in einem gedrosselten Vergleichsarbeitspunkt betrieben werden. Für jeden der Wechselrichter kann dann das Verhältnis zwischen maximalem und gedrosseltem Leistungsertrag gebildet werden.

Vorzugsweise wird sukzessive für jeden Wechselrichter ein solcher Leistungszusammenhang, insbesondere ein solches Verhältnis von maximal erzeugbarer Leistung zu gedrosselter Leistung bestimmt. Vorzugsweise kann aus den Leitungszusammenhängen aller Wechselrichter und/oder aus den maximal erzeugbaren Leistungen aller Wechselrichter ein Gesamtzusammenhang zwischen der gedrosselten elektrischen Leistung und der maximal erzeugbaren elektrischen Leistung der gesamten Photovoltaikanlage bestimmt werden. Es können also beispielsweise die Einzelzusammenhänge ausgewertet werden, oder es kann direkt die gesamte maximal erzeugbare Leistung bestimmt werden, indem jeder der Wechselrichter einmal, kurz in seinem maximalen Arbeitspunkt betrieben wurde. Diese Leistungen werden aufsummiert und bilden die gesamte maximal erzeugbare Leistung der Photovoltaikanlage insgesamt für die momentan vorherrschende Sonneneinstrahlung. Vorzugsweise werden die Wechselrichter hierbei sukzessive in kurzen Abständen in ihren maximalen Leistungspunkten betrieben. So kann beispielsweise jede Minute oder im Bereich von 30 Sekunden bis 3 Minuten jeweils ein Wechselrichter in seinem maximalen Arbeitspunkt betrieben werden. Durch diesen schnellen Wechsel soll möglichst eine gesamte Leistung oder ein Gesamtzusammenhang bestimmt werden, bevor sich die Randbedingungen, insbesondere die momentan vorherrschende Sonneneinstrahlung, wieder ändert. Dieser gesamte Vorgang kann natürlich in regelmäßigen Abständen wiederholt werden.

Hierbei ist zu beachten, dass in einer Variante jeweils ein Wechselrichter einem Solargenerator zugeordnet ist. Ein Wechselrichter kann aber auch für mehrere Solargeneratoren vorgesehen sein. Auch können die Wechselrichter eine unterschiedliche Dimensionierung aufweisen, insbesondere unterschiedliche Nennleistungen aufweisen und/oder mit unterschiedlich großen - hinsichtlich der erzeugbaren elektrischen Leistung - Solargeneratoren gekoppelt sein. Im Falle der Ermittlung von Einzelverhältnissen zwischen maximal erzeugbarer Leistung und gedrosselter Leistung jedes Wechselrichters, muss bei dem Ermitteln eines Gesamtzusammenhangs entsprechend die jeweilige Größe des Wechselrichters oder seiner Einheit berücksichtigt werden. Dies kann beispielsweise durch eine Gewichtung erfolgen.

Gemäß einer weiteren Ausführungsform arbeitet die Photovoltaikanlage zweistufig. Insbesondere wird wenigstens ein zweistufiger Wechselrichter verwendet. In einer ersten Stufe, die beispielsweise einen Stromsteller, insbesondere ein Hochsetzsteller sein kann, wird dabei zeitweise die maximal erzeugbare elektrische Leistung in einen elektrischen Zwischenspeicher eingegeben und in einer zweiten Stufe, die dem Zwischenspeicher nachgelagert ist, wird eine gedrosselte elektrische Leistung aus dem elektrischen Zwischenspeicher in das elektrische Netz eingespeist. Somit speist der Wechselrichter in seiner zweiten Stufe im Grunde immer mit der gedrosselten, also der vorgegebenen Leistung in das Netz ein. Die erste Stufe gibt ebenfalls die gedrosselte elektrische Leistung in den elektrischen Zwischenspeicher. Zeitweise erhöht diese erste Stufe aber die einzuspeisende elektrische Leistung auf den maximal möglichen Wert und kann dadurch den tatsächlich aufgrund der momentan vorherrschenden Sonneneinstrahlung maximal möglichen Wert der elektrischen Leistung bestimmen. Für diesen kurzen Zeitpunkt wird der davor geschaltete Solargenerator somit tatsächlich in dem optimalen Arbeitspunkt betrieben und es wird somit der tatsächliche Wert ermittelt. Durch die Verwendung des elektrischen Zwischenspeichers - der beispielsweise als Zwischenkreiskondensator ausgeführt sein kann - kann die kurzfristig zu viel aus der Sonneneinstrahlung entnommene Leistung in diesem zwischengepuffert werden, so dass der gedrosselte Wert hinsichtlich der Einspeisung ins Netz eingehalten werden kann.

Hierdurch ist es möglich, auch bei einer Photovoltaikanlage, die nur einen, aber zweistufigen Wechselrichter aufweist, die maximal erzeugbare Leistung mit guter Genauigkeit und unter realen Bedingungen zu ermitteln. Natürlich ist diese Vorgehensweise auch dann möglich, wenn mehrere zweistufige Wechselrichter verwendet werden. Bei dieser Verwendung eines zweistufigen Wechselrichters kann die erste Stufe als Referenzeinheit angesehen werden. Diese erste Stufe wird somit in dem gedrosselten Arbeitspunkt und zeitweise im maximalen Arbeitspunkt betrieben und die zweite Stufe wird immer im gedrosselten Arbeitspunkt betrieben, solange denn überhaupt gedrosselt wird.

Gemäß einer bevorzugten Ausgestaltung wird eine Photovoltaikanlage vorgeschlagen, bei der wenigstens ein Wechselrichter vorgesehen ist, dem elektrische Leistung mittels wenigstens zweier, parallel zueinander geschalteter Leistungssteller zugeführt wird, wobei einer dieser Leistungssteller die Referenzeinheit bildet und zeitweise in seinem maximalen Arbeitspunkt betrieben wird, während wenigstens ein anderer der Leistungssteller in einem gedrosselten Arbeitspunkt betrieben wird. Ein solcher Leistungssteller kann insbesondere ein sogenannter MPP-Tracker sein. Unter diesem Begriff ist eine Vorrichtung bekannt, die jeweils einen Arbeitspunkt mit maximaler Leistungsabgabe sucht. Somit kann einer dieser Leistungssteller jeweils in einem maximalen Arbeitspunkt betrieben werden, wohingegen der andere Leistungssteller in einem gedrosselten Arbeitspunkt arbeitet. Dadurch, dass wenigstens einer der Leistungssteller im maximalen Arbeitspunkt arbeitet, ist entsprechend für die momentan vorherrschende Sonneneinstrahlung die maximal erzeugbare Leistung für diesen Leistungssteller bekannt und kann auf die übrigen Leistungssteller hochgerechnet werden.

Eine weitere Ausführungsform schlägt eine Photovoltaikanlage vor, die dadurch gekennzeichnet ist, dass die Referenzeinheit wenigstens einen Referenzsolargenerator aufweist, der durch eine Referenzkennlinie charakterisiert ist, und die Photovoltaik-Anlage wenigstens einen Hauptsolargenerator aufweist, der durch eine Hauptkennlinie charakterisiert ist, mit einer Nennleistung größer als die Nennleistung des Referenzsolargenerators, wobei die Photovoltaik-Anlage dazu vorbereitet ist, dass eine Referenzmessung durchgeführt wird, indem der Referenzsolargenerator seine Referenzkennlinie und zeitgleich der Hauptsolargenerator seine Hauptkennlinie durchfährt und hierbei die Referenzkennlinie und die Hauptkennlinie gemessen und in einem Speicher zur weiteren Verwendung hinterlegt werden. Die Referenzeinheit weist hierbei wenigstens einen Referenzsolargenerator auf und vorzugsweise auch einen Wechselrichter, der damit gekoppelt ist. Die Photovoltaikanlage weist wenigstens einen Hauptsolargenerator auf und vorzugsweise wenigstens einen damit gekoppelten Wechselrichter. Unter einem Solargenerator ist in diesem Zusammenhang ganz generell eine Einheit zu verstehen, die aus Sonneneinstrahlung elektrische Leistung erzeugt, insbesondere mittels einer oder mehrerer Photovoltaikzellen. Diese Photovoltaikzellen können zu sogenannten Panels zusammengefasst und Panels zu sogenannten Strings zusammengefasst sein. Diverse Strings können zu einem Solargenerator zusammengefasst sein oder ein Solargenerator kann auch nur einen String oder nur ein Panel oder nur eine Zelle bezeichnen. Gemäß der Ausgestaltung, die einen Hauptsolargenerator und einen Referenzsolargenerator verwendet, ist unter dem Referenzsolargenerator insbesondere eine sehr kleine Einheit zu verstehen, die keinen oder keinen wesentlichen Anteil an der Gesamterzeugung der elektrischen Leistung der Photovoltaikanlage hat. Der Hauptsolargenerator betrifft im Grunde die Gesamtheit aller Solarzellen bzw. Photovoltaikzellen bis auf den Referenzsolargenerator. Die Referenzkennlinie und die Hauptkennlinie unterscheiden sich somit üblicherweise zumindest in ihrer Stromamplitude erheblich. Durch eine Normierung auf den jeweiligen Kurzschlusstrom und eine eine Normierung auf die jeweilige Leerlaufspannung entfällt dieser Unterschied und es bleibt im Grunde nur die jeweilige Charakteristik der beiden Kennlinien.

Mittels dieser beiden Kennlinien, deren Bezug zueinander in der Photovoltaikanlage, z. B. einer zentralen Rechen- und/oder Steuereinheit, abgespeichert ist, kann aus dem maximalen Arbeitspunkt der Referenzkennlinie, der tatsächlich eingestellt wird, auf die maximal erzeugbare Leistung der Photovoltaikanlage, insbesondere des Hauptsolargenerators, geschlossen werden. Aufgrund der Berücksichtigung der Kennlinie werden auch die Charakteristiken des Hauptsolargenerators und des Referenzsolargenerators berücksichtigt.

Gemäß einer weiteren Ausführungsform ist der Referenzsolargenerator mit einem Referenzwechselrichter gekoppelt bzw. beide bilden zusammen den Referenzsolargenerator und die aus der Sonneneinstrahlung erzeugte elektrische Leistung wird als elektrische Versorgungsleistung für den Referenzwechselrichter verwendet, insbesondere so, dass der Referenzwechselrichter zusammen mit dem Referenzsolargenerator von dem Hauptsolargenerator hinsichtlich elektrischer Versorgung unabhängig arbeitet. Dies ist besonders dann günstig, wenn der Referenzsolargenerator und der Referenzwechselrichter hinsichtlich ihrer elektrisch erzeugbaren Leistung klein sind und im Wesentlichen zu Mess- bzw. Referenzzwecken verwendet werden, um die maximal erzeugbare elektrische Leistung bzw. einen Quotient zwischen maximal erzeugbarer elektrischer Leistung und gedrosselter Leistung zu bestimmen. Durch die Verwendung der erzeugten elektrischen Leistung zum Betrieb des Referenzsolargenerators oder Referenzwechselrichters können diese autark arbeiten. Allerdings ist natürlich ein Informationsaustausch mit dem Hauptsolargenerator bzw. damit gekoppelten Wechselrichtern notwendig. Der Referenzwechselrichter braucht aber nicht durch den Hauptsolargenerator elektrisch versorgt zu werden. Im Übrigen kann bei entsprechend kleiner Auslegung die erzeugte elektrische Leistung des Referenzsolargenerators durch diesen durch seinen Betrieb verbraucht werden. Es ist zu beachten, dass anstelle eines Referenzwechselrichters auch eine andere Leistungseinheit oder Leistungssteller verwendet werden kann.

Obige Ausführungen zur Photovoltaik-Anlage gelten entsprechend zur Erläuterung des erfindungsgemäßen Verfahrens. Die Erfindung und weitere Ausführungsformen ergeben sich zudem aus den Ansprüchen.

Nachfolgend wird die Erfindung anhand von Ausführungsbeispielen unter Bezugnahme auf die begleitentenden Figuren näher beschrieben.
- Figur 1: zeigt eine Kennlinie einer Photovoltaikanlage und eine damit verknüpfte Kennlinie einer Referenzeinheit gemäß einem Aspekt der Erfindung schematisch.
- Figur 2: zeigt eine Photovoltaikanlage zusammen mit einer Referenzeinheit gemäß einer Ausführungsform der Erfindung schematisch.
- Figur 3: zeigt eine Photovoltaikanlage mit mehreren Solargeneratoren und Wechselrichtern gemäß einer Ausführungsform der Erfindung schematisch.
- Figur 4: zeigt eine Photovoltaikanlage gemäß einer weiteren Ausführungsform der Erfindung schematisch.

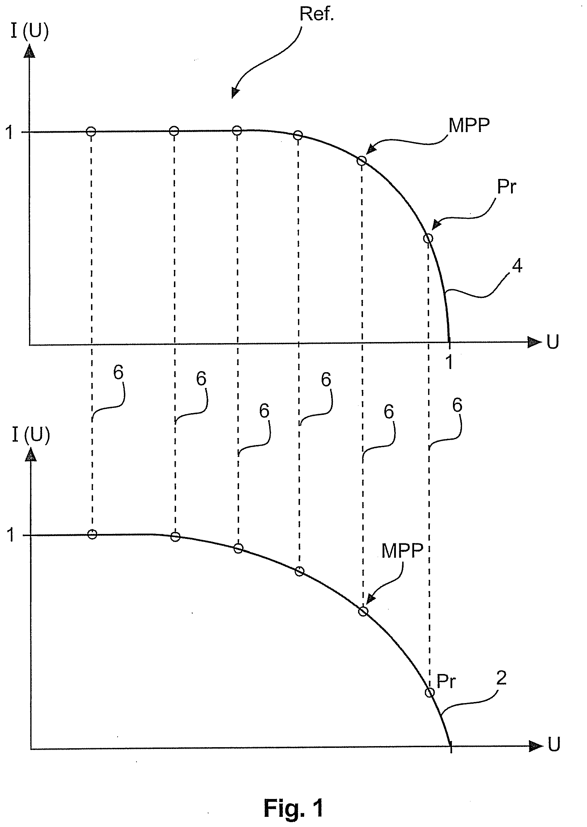

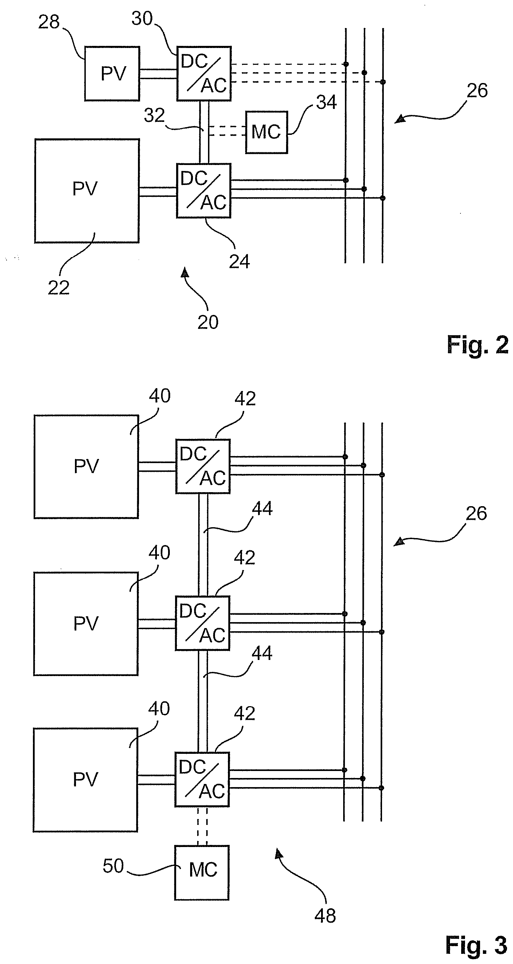

Figur 1 zeigt eine Kennlinie einer Photovoltaikanlage, nämlich die Abhängigkeit des Ausgangsstromes von der Ausgangsspannung eines bzw. des Solargenerators im unteren Bereich der Figur 1. Im oberen Bereich der Figur 1 ist eine entsprechende Kennlinie einer Referenzeinheit dargestellt. Beide Kennlinien sind jeweils auf den Kurzschlussstrom bzw. die Leerlaufspannung des jeweils gemessenen Solargenerators normiert. Beide Kennlinien wurden zeitgleich aufgenommen und ein Bezug zwischen beiden Kennlinien hergestellt und in einem entsprechenden Speicher einer Photovoltaikanlage abgelegt. Im optimalen Fall kann eine Zuordnung über zwei Eckpunkte erfolgen, nämlich den Kurzschlussstrom und die Leerlaufspannung. Die Zuordnung der Kennlinie 2 der Photovoltaikanlage zur Referenzkennlinie 4 der Referenzeinheit ist durch gestrichelte Linien 6 symbolisiert, die die beiden Kennlinien 2 und 4 verbinden. Die Kennlinie 2 der Photovoltaikanlage weist einen gedrosselten Arbeitspunkt Pᵣ auf, dem auch ein gedrosselter Arbeitspunkt Pᵣ auf der Referenzkennlinie 4 zugeordnet ist. Außerdem weist sowohl die Kennlinie 2der Photovoltaikanlage als auch die Referenzkennlinie 4 einen Arbeitspunkt maximaler Leistung auf, der auch als "Maximum-Power-Point" MPP bezeichnet wird. Gemäß einer Ausführungsform der Erfindung wird die Photovoltaikanlage in dem gedrosselten Arbeitspunkt Pᵣ insbesondere aufgrund einer externen Vorgabe betrieben. Aufgrund der gleichzeitigen Vorabmessung, die auch Referenzmessung genannt werden kann, bei der die beiden in Figur 1 gezeigten Kennlinien 2 und 4 aufgenommen und in Beziehung gesetzt wurden, kann dem Arbeitspunkt Pᵣ auf der Kennlinie der Photovoltaikanlage der Arbeitspunkt Pᵣ auf der Referenzkennlinie 4 zugeordnet werden. Die Referenzeinheit selbst ist- beispielsweise aufgrund ihrer vergleichsweise geringen Leistungsabgabe oder weil diese gar keine Leistung ins Netz einspeist - nicht auf einen Betrieb in dem gedrosselten Arbeitspunkt Pᵣ festgelegt. Vielmehr kann die Referenzeinheit frei den MPP suchen und - zumindest zeitweise - in diesem Arbeitspunkt betrieben werden. Dabei wird die erzeugbare elektrische Leistung gemessen. Die Referenzeinheit kann nun auch in dem gedrosselten Arbeitspunkt Pᵣ betrieben werden, oder dieser Punkt kann aufgrund der Kenntnis der Referenzkennlinie 4 berechnet werden. In jedem Fall ist so für die Referenzeinheit die Leistung des korrespondierenden Arbeitspunktes als auch die Leistung des MPP messbar.Figur 2 zeigt eine Photovoltaikanlage 20 mit einem Hauptsolargenerator 22, der einen Gleichstrom dem daran angeschlossenen Wechselrichter 24 zuführt. Der Wechselrichter 24 erzeugt einen Wechselstrom und speist diesen in das Netz 26 ein. Figur 2 zeigt eine dreiphasige Einspeisung, die aber genauso gut einphasig ausgeführt sein kann.

Außerdem ist ein Referenzsolargenerator 28 gezeigt, der einen Gleichstrom an den Referenzwechselrichter 30 liefert. Der Referenzsolargenerator 28 bildet zusammen mit dem Referenzwechselrichter 30 eine Referenzeinheit. Diese Referenzeinheit kann mittels des Referenzwechselrichters 30 einen dreihpasigen Strom in das Netz 26 einspeisen. Hierbei kann die Referenzeinheit 28, 30 in unterschiedlichen Betriebspunkten betrieben werden, nämlich insbesondere einem gedrosselten Arbeitspunkt, der einem gedrosselten Arbeitspunkt des Hauptsolargenerators 22 mit dem Wechselrichter 24 entspricht, wenn dieser gedrosselt betrieben wird. Außerdem kann die Referenzeinheit 28, 30 in einem maximalen Arbeitspunkt, nämlich im sogenannten MPP betrieben werden. Beide Arbeitspunkte können erfasst und ein entsprechendes Leistungsverhältnis, das auch als performance-ratio bezeichnet werden kann, bestimmt werden.

Die Berechnung kann beispielsweise in dem Referenzwechselrichter 30 und/oder dem Wechselrichter 24 vorgenommen werden, die durch eine Datenleitung 32 gekoppelt sind, um entsprechende Informationen auszutauschen. Ebenso kann eine Recheneinheit, wie ein Mikrocomputer 34 als separate Einheit vorgesehen sein. Eine Verbindung von dem Mikrocomputer 34 zu der Datenleitung 32 ist gestrichelt dargestellt, um die Variante einer separaten Recheneinheit als Option kenntlich zu machen.

Die Figur 2 soll veranschaulichen, dass gemäß einer Ausführungsform der Referenzsolargenerator 28 und der Referenzwechselrichter 30 hinsichtlich ihrer Leistung klein ausgelegt sein können. Die Referenzeinheit 28, 30 muss in einem bzw. nacheinander mehreren Arbeitspunkten betrieben werden können, um die beschriebenen Referenzmessungen durchzuführen. Darauf, ob tatsächlich elektrische Leistung einphasig, dreiphasig oder gar nicht in das Netz 26 eingespeist wird, kommt es nicht an. Um dies zu veranschaulichen ist die Verbindung zwischen dem Referenzwechselrichter 30 und dem Netz 26 gestrichelt dargestellt.

Figur 3 zeigt eine weitere Ausführungsform, bei der- zur vereinfachten Darstellung - drei gleiche Solargeneratoren 40 vorgesehen sind, die jeweils einen Gleichstrom erzeugen und an jeweils einen Wechselrichter 42 übertragen. Jeder der Wechselrichter 42 kann in das Netz 26 einspeisen. Dies ist gemäß Figur 3 als dreiphasige Einspeisung ausgeführt, die auch einphasig vorgesehen sein kann. Zum Übertragen von Informationen untereinander ist eine Datenleitung 44 vorgesehen. Die Steuerung der Photovoltaikanlage 48 der Figur 3 kann mittels entsprechender Recheneinheiten in einem oder mehreren der Wechselrichter 42 erfolgen oder es kann der dargestellte Mikrocomputer 50 dazu verwendet werden. Um die Verwendung dieses Mikrocomputers 50 als Option zu verdeutlichen, besteht eine gestrichelte Verbindung zu einem der Wechselrichter 42.

Um nun bei gedrosseltem Betrieb der Photovoltaikanlage 48 die maximal erzeugbare Leistung der gesamten Photovoltaikanlage 48 zu bestimmen, kann gemäß einer Ausführungsform gemäß Fig. 3 wie folgt vorgegangen werden:
Zunächst werden alle Solargenerator-Wechselrichter-Einheiten 40, 42 in dem gedrosselten Arbeitspunkt betrieben. Anschließend wird der erste Solargenerator 40 mit Hilfe des zugeordneten Wechselrichters 42 kurzzeitig in seinem MPP betrieben und die sich hierbei einstellende Leistung erfasst, die somit die maximal erzeugbare Leistung bei der momentan vorherrschenden Sonneneinstrahlung dieses Solargenerators ist. Anschließend wird dieser Solargenerator 40 wieder mit Hilfe des zugeordneten Wechselrichters 42 im gedrosselten Arbeitspunkt betrieben.

Auf gleiche Art und Weise wird sukzessive mit den anderen beiden Solargeneratoren 40 verfahren. Wurde jeder dieser Solargeneratoren 40 zumindest kurzzeitig in seinem MPP betrieben, so ist die maximale Leistung bezogen auf die momentan vorherrschende Sonneneinstrahlung jedes dieser Solargeneratoren 40 erfasst worden und die Summe dieser Leistungen ist die maximal erzeugbare Leistung der gesamten Photovoltaikanlage 48 bei der momentan vorherrschenden Sonneneinstrahlung.

Das kurzzeitige Betreiben jeweils eines Solargenerators 40 mit höherer Leistung als vorgesehen, sollte in einem Toleranzberiech liegen, ohne eine entsprechende Vorgabe des Netzbetreibers zu verletzen. Für den Fall, dass das Betreiben eines der Solargeneratoren kurzzeitig in einem höheren Arbeitspunkt zu einer unzulässig hohen Leistungserzeugung der gesamten Photovoltaikanlage 48 führt, so können die Arbeitspunkte der übrigen Solargeneratoren entsprechend geringfügig abgesenkt werden, um eine solche unzulässige Leistungserhöhung zu vermeiden bzw. ihr entgegenzuwirken.

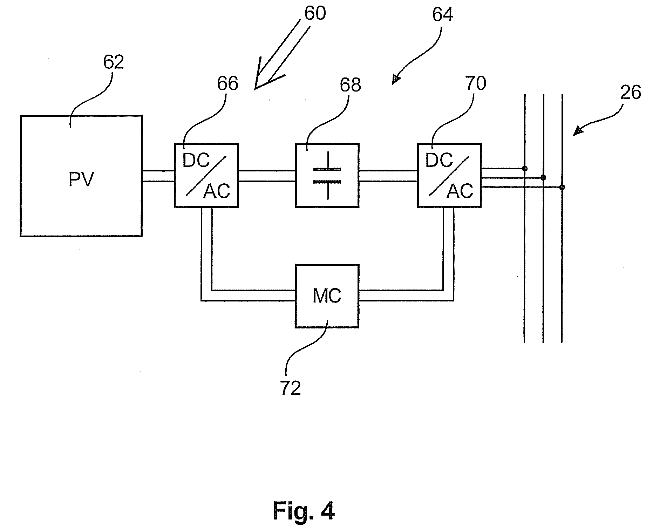

Figur 4 zeigt eine weitere Ausführungsform, bei der die Photovoltaikanlage 60 einen Solargenerator 62 aufweist, der mit einem zweistufigen Wechselrichter 64 gekoppelt ist. Der zweistufige Wechselrichter 64 weist als erste Stufe einen Gleichstromsteller 66 auf, der insbesondere als Hochsetzsteller ausgebildet sein kann. Dieser Gleichstromsteller 66 erhält einen Gleichstrom von dem Solargenerator 62 und erzeugt ebenfalls einen Gleichstrom, der in den Zwischenspeicher 68 eingegeben wird. Der Zwischenspeicher 68 ist hier als Batteriespeicher symbolisiert, kann aber beispielsweise auch als Gleichspannungszwischenkreis eines Wechselrichters ausgebildet sein und zum Speichern entsprechende Gleichspannungszwischenkreiskondensatoren aufzuweisen.

An den Zwischenspeicher 68 ist eine Wechselrichtereinheit 70 angeschlossen, die die im Zwischenspeicher 68 gespeicherte Energie verwendet und in einen Wechselstrom, insbesondere einen dreiphasigen Wechselstrom wandelt, und in das Netz 26 einspeist. Zur Koordination und Auswertung wird eine als Mikrocomputer 72 veranschaulichte Recheneinheit verwendet, die insbesondere den Gleichstromsteller 66 und die Wechselrichtereinheit 70 koordiniert.

Wird nun die Photovoltaikanlage 60 in einem gedrosselten Arbeitspunkt betrieben, so arbeitet insbesondere die Wechselrichtereinheit 70 kontinuierlich in diesem gedrosselten Arbeitspunkt. Um nun die maximal erzeugbare Leistung gemäß der momentan vorherrschenden Sonneneinstrahlung zu ermitteln, wird der Gleichstromsteller 66 kurzfristig im MPP betrieben. Damit wird entsprechend der Solargenerator 62 im MPP betrieben. Die hierbei zu viel erzeugte Leistung wird aber nur in den Zwischenspeicher 68 eingespeist. Die Wechselrichtereinheit 70 kann nach wie vor in ihrem gedrosselten Betriebspunkt betrieben werden und nur so viel Leistung in das Netz 26 einspeisen, wie zulässig ist. Die kurzzeitige Erhöhung der Leistungsentnahme und damit kurzzeitige höhere Leistungseinspeisung in den Zwischenspeicher 68 dürfte in einem Toleranzbereich liegen. Sollte hierdurch dennoch zu viel Leistung erzeugt und in den Zwischenspeicher 68 eingespeist werden, so kann kurzfristig der Gleichstromsteller 66 und damit der Solargenerator 62 in einem noch niedrigeren Arbeitspunkt als der gedrosselte Arbeitspunkt betrieben werden.

In jedem Fall kann die maximal erzeugbare Leistung experimentell ermittelt werden, während die Photovoltaikanlage 60 durchgängig im gedrosselten Arbeitspunkt in das Netz 26 einspeist.

Zusammenfassend betrifft die Erfindung somit die Problematik einer Leistungsbegrenzung von Photovoltaikanlagen. Gemäß dem EEG 2009 ist es der Energieversorgern, nämlich Netzbetreibern möglich, Photovoltaikanlagen in ihrer Leistung zu begrenzen, um die dem Betreiber durch die Begrenzung entgangenen Erträge zu ermitteln, ist es notwendig, die erreichbaren Energieerträge während des Zeitraumes der Begrenzung zu erfassen.

Erfindungsgemäß werden Vorschläge präsentiert, die geeignet sind, entgangene Energiemengen bei Begrenzung der Anlagenleistung zu ermitteln. Einige Ausführungsformen schlagen Lösungen ohne zusätzliche Sensoren, wie Sensoren zur Messung der Einstrahlung, Temperatur oder ähnlicher Werte vor.

Ein Gedanke ist, dass dann, wenn die Anlagenleistung über eine zentrale Steuereinheit reduziert wird, diese Reduktion ungleichmäßig auf die Wechselrichter in der Anlage, nämlich der gesamten Photovoltaikanlage, verteilt werden können. Ein solches Ungleichgewicht kann soweit ausgeprägt werden, dass ein oder mehrere Wechselrichter in ihrer Leistung nicht mehr begrenzt werden, während die übrigen Wechselrichter um die gesamte nötige Differenzleistung zwischen der maximal verfügbaren Leistung und der begrenzten Leistung reduziert werden.

Wird dieses Ungleichgewicht zeitlich zwischen den Wechselrichtern variiert, so ist es möglich, dass jeder Wechselrichter für einen gewissen Zeitraum im MPP betrieben wird und somit die an diesem Wechselrichter maximal erzielbare Leistung unter den gegebenen Einstrahlungsbedingungen ermittelt werden kann.

Erfolgt diese Variation des Ungleichgewichts ausreichend schnell, wie beispielsweise im Minutenrhythmus, so kann aus der Summe der maximal erreichten Leistungen der einzelnen Wechselrichter die theoretisch ohne Begrenzung erreichbare Leistung der Photovoltaikanlage insgesamt unter den gegebenen Einstrahlungsbedingungen und somit die entgangenen Erträge ermittelt werden.

Gemäß einer Ausführungsform wird eine Lösung vorgeschlagen, die auch mit Photovoltaikanlagen mit mindestens einem Wechselrichter angewendet werden kann, wenn mehr als 1 MPP-Tracker vorhanden sind. Eine notwendige Leistungsvariation findet dann nicht durch den Wechselrichter, sondern zwischen den MPP-Trackern statt.

Bei entsprechender Auslegung kann die vorgeschlagene Lösung eine hohe Genauigkeit erreichen. Dies gilt insbesondere für die Ausführungsformen, bei denen unmittelbar auf der Netzseite gemessen werden kann. Vorteilhafterweise wird der Hardwareaufwand reduziert, wenn Sensoren eingespart werden können.

Gemäß einer Ausführungsform wird parallel zur Photovoltaikanlage eine Referenzsolarzelle angebracht, die möglichst mit den verbauten Zellen identisch ist. Vorab wird zunächst eine Referenzmessung durchgeführt. Hierzu sind die Kennlinien der Referenzzelle und der Photovoltaikanlage gleichzeitig zu durchfahren. Die gemessenen Kennlinien werden auf den Kurzschlussstrom und die Leerlaufspannung normiert und der Bezug der Kennlinien untereinander wird für weitere Berechnungen in einem Überwachungssystem, das auch Monitoringsystem genannt wird, hinterlegt. Die normierte Kennlinie der Referenzzelle stellt ein Abbild der Anlagenkennlinie dar.

Die aktuellen Messwerte der Anlage, nämlich der Photovoltaikanlage, sind im Monitoring, also beim Betrieb und Auswertung der Photovoltaikanlage auf die zuvor vorgenommene Referenzmessung der Anlagenkennlinie zu normieren. Ein Vergleich des aktuellen normierten Arbeitspunktes der Anlage mit der normierten Kennlinie der Referenzzelle, die nun permanent durchfahren werden kann, liefert somit auch bei Begrenzung der Einspeiseleistung ein Verhältnis der theoretisch erzeugbaren Leistung zur gedrosselten Leistung, das auch als performance-ratio bezeichnet wird. Somit ist hierdurch die entgangene Einspeisung ermittelbar.

Gemäß einer Ausführungsform wird vorgeschlagen, dass die Spannungs-Strom Kennlinie der Referenzzelle nur sporadisch durchfahren wird und die Auswahl der Elektronik, die für diese Referenzzelle verwendet wird, direkt aus der Referenzzelle versorgt wird. Hierfür wird vorgeschlagen, dass die Solarzelle einen Pufferspeicher lädt, beispielsweise einen Kondensator. Die Energie des Pufferspeichers sollte dabei so groß gewählt und geladen werden, dass sie für mindestens eine Messung einschließlich der Übertragung der Daten an die Photovoltaikanlage ausreicht. Die Elektronik kann sich nach erfolgter Messung wieder abschalten und dann wieder einschalten, wenn der Pufferspeicher wieder geladen ist.

Bei der Verwendung zweistufiger Wechselrichter in der Photovoltaikanlage - hierzu sind beispielsweise Produkte unter dem Namen "voltwerk VS5" und "voltwerk VS15" auf dem Markt erhältlich - kann das Durchfahren des MPPs durch den generatorseitigen Steller durchgeführt werden. Währenddessen wird die Einspeiseleistung durch den netzseitigen Steller begrenzt. Die Differenzenergie, nämlich zwischen dem gedrosselten Arbeitspunkt und dem MPP, kann bei ausreichend schnellem Durchfahren der Kennlinie - die hierfür aber nur in dem Bereich zwischen dem aktuellen, gedrosselten Arbeitspunkt und dem MPP erfolgen muss - von einem Zwischenspeicher, wie dem Zwischenkreis des Wechselrichters gepuffert werden. Dies stellt eine Lösung dar, bei der zur Ermittlung des sogenannten "performance-ratio" keine zusätzlichen Geräte nötig wären.

Bei Verwendung der Photovoltaikanlage selbst, ohne zusätzliche Geräte zur Messung ist mit hoher Genauigkeit zu rechnen. Zudem werden zusätzliche Hardwarekosten ausgeschlossen.

## Patentansprüche

1. Photovoltaik-Anlage vorbereitet zum Bestimmen einer maximal erzeugbaren Abgabenleistung, wenn die Photovoltaik-Anlage in der Leistung gedrosselt betrieben wird, wobei
- eine Referenzeinheit (28, 30) vorgesehen ist, die einen Teil der Photovoltaik-Anlage bildet, und zum Betreiben in einem maximalen Arbeitspunkt der Referenzeinheit (28, 30) vorbereitet ist, in dem soviel elektrische Leistung wie möglich mit der Referenzeinheit (28, 30) aus der vorherrschenden Sonneneinstrahlung erzeugt wird,
- die Photovoltaik-Anlage dazu vorbereitet ist, in einem gedrosselten Arbeitspunkt betrieben zu werden, in dem eine gedrosselte elektrische Leistung aus der jeweils momentan vorherrschenden Sonneneinstrahlung erzeugt und in ein elektrisches Netz (26) eingespeist wird, wobei die gedrosselte elektrische Leistung geringer ist als eine erzeugbare elektrische Leistung, die maximal mit der Photovoltaik-Anlage und mit der jeweils momentan vorherrschenden Sonneneinstrahlung erzeugt werden könnte,
- die Referenzeinheit (28, 30) dazu vorbereitet ist, ihren Arbeitspunkt in einen mit dem gedrosselten Arbeitspunkt der Photovoltaik-Anlage korrespondierenden gedrosselten Vergleichsarbeitspunkt der Referenzeinheit (28, 30) zu verändern,
- die Photovoltaik-Anlage dazu eingerichtet ist, einen Leistungszusammenhang zwischen der im maximalen Arbeitspunkt der Referenzeinheit (28, 30) erzeugbaren elektrischen Leistung und der im Vergleichsarbeitspunkt erzeugbaren elektrischen Leistung zu bestimmen, und
- basierend auf dem Leistungszusammenhang auf die maximal erzeugbare Abgabenleistung der Photovoltaik-Anlage und damit auf den Verlust durch den gedrosselten Betrieb geschlossen wird.

2. Photovoltaik-Anlage nach Anspruch 1,
**dadurch gekennzeichnet, dass** die Photovoltaik-Anlage dazu vorbereitet ist, dass als Leistungszusammenhang der Quotient der im maximalen Arbeitspunkt erzeugbaren elektrischen Leistung zu der im Vergleichsarbeitspunkt erzeugbaren elektrischen Leistung gebildet wird.

3. Photovoltaik-Anlage nach Anspruch 1 oder 2,
**dadurch gekennzeichnet, dass** die Referenzeinheit (28, 30) wenigstens einen ersten Wechselrichter (24) umfasst und dass wenigstens ein weiterer Wechselrichter vorgesehen ist, der zeitweise in einem maximalen Arbeitspunkt betrieben wird, während der erste Wechselrichter (24) in dem gedrosselten Vergleichsarbeitspunkt betrieben wird, wobei optional weitere Wechselrichter vorgesehen sind und jeweils einer der Wechselrichter zeitweise in einem maximalen Arbeitspunkt betrieben wird, während die übrigen Wechselrichter jeweils in einem gedrosselten Vergleichsarbeitspunkt betrieben werden.

4. Photovoltaik-Anlage nach Anspruch 3,
**dadurch gekennzeichnet, dass** sukzessive für jeden Wechselrichter ein Leistungszusammenhang und/oder die jeweils maximal erzeugbare elektrische Leistung bestimmt wird und vorzugsweise aus den Leistungszusammenhängen aller Wechselrichter und/oder aus den maximal erzeugbaren Leistungen aller Wechselrichter ein Gesamtzusammenhang zwischen der gedrosselten elektrischen Leistung und der maximal erzeugbaren elektrischen Leistung der gesamten Photovoltaik-Anlage bestimmt wird.

5. Photovoltaik-Anlage nach einem der vorstehenden Ansprüche,
**gekennzeichnet durch** wenigstens einen zweistufigen Wechselrichter, wobei der zweistufige Wechselrichter so arbeitet, dass
- eine erste Stufe die Referenzeinheit (28, 30) bildet und zeitweise die maximal erzeugbare elekt-rische Leistung in einen elektrischen Zwischenspeicher eingibt und
- eine zweiten Stufe vorgesehen ist, die eine gedrosselte elektrische Leistung aus dem elektrischen Zwischenspeicher in das elektrische Netz (26) einspeist.

6. Photovoltaik-Anlage nach einem der vorstehenden Ansprüche, **dadurch gekennzeichnet, dass** wenigstens ein Wechselrichter vorgesehen ist, dem elektrische Leistung mittels wenigstens zweier, parallel zueinander geschalteter Leistungssteller, insbesondere sogenannter MPP-Tracker, zugeführt wird, wobei einer der Leistungssteller die Referenzeinheit (28, 30) bildet und zeitweise in seinem maximalen Arbeitspunkt betrieben wird, während wenigstens ein anderer der Leistungssteller in einem gedrosselten Arbeitspunkt betrieben wird.

7. Photovoltaik-Anlage nach einem der vorstehenden Ansprüche, **dadurch gekennzeichnet, dass**
- die Referenzeinheit (28, 30) wenigstens einen Referenzsolargenerator aufweist, der durch eine Referenzkennlinie (4) charakterisiert ist, und
- die Photovoltaik-Anlage wenigstens einen Hauptsolargenerator (22) aufweist, der durch eine Hauptkennlinie charakterisiert ist, mit einer Nennleistung größer als die Nennleistung des Referenzsolargenerators, wobei
die Photovoltaik-Anlage dazu vorbereitet ist, dass eine Referenzmessung durchgeführt wird, indem der Referenzsolargenerator seine Referenzkennlinie (4) und zeitgleich der Hauptsolargenerator (22) seine Hauptkennlinie durchfährt und hierbei die Referenzkennlinie (4) und die Hauptkennlinie gemessen und in einem Speicher zur weiteren Verwendung hinterlegt werden.

8. Photovoltaik-Anlage nach Anspruch 7,
**dadurch gekennzeichnet, dass** die Referenzkennlinie (4) und die Hauptkennlinie jeweils auf einen Kurzschlussstrom und eine Leerlaufspannung normiert sind.

9. Photovoltaik-Anlage nach Anspruch 7 oder 8,
**dadurch gekennzeichnet, dass** der Referenzsolargenerator einen Referenzwechselrichter aufweist und aus der Sonneneinstrahlung erzeugte elektrische Leistung als elektrische Versorgungsleistung zum Betreiben des Referenzwechselrichters verwendet wird, insbesondere, dass der Referenzsolargenerator und der Referenzwechselrichter von dem Hauptsolargenerator (22) elektrisch unabhängig arbeiten.

10. Verfahren zum Bestimmen einer maximal erzeugbaren Abgabenleistung einer in der Leistung gedrosselten Photovoltaik-Anlage umfassend die Schritte:
- Betreiben der Photovoltaik-Anlage in einem gedrosselten Arbeitspunkt der Photovoltaik-Anlage, in dem eine gedrosselte elektrische Leistung aus Sonneneinstrahlung erzeugt und in ein elektrisches Netz (26) eingespeist wird, die geringer ist als eine erzeugbare elektrische Leistung, die mit der Photovoltaik-Anlage und mit der momentan vorherrschenden Sonneneinstrahlung möglich wäre,
- Betreiben eines Teils der Photovoltaik-Anlage als Referenzeinheit (28, 30) in einem maximalen Arbeitspunkt der Referenzeinheit (28, 30), in dem soviel elektrische Leistung wie möglich aus der momentan vorherrschenden Sonneneinstrahlung erzeugt wird,
- Verändern des Arbeitspunktes der Referenzeinheit (28, 30) in einen mit dem gedrosselten Arbeitspunkt der Photovoltaik-Anlage korrespondierenden gedrosselten Vergleichsarbeitspunkt der Referenzeinheit (28, 30),
- Bestimmen eines Leistungszusammenhangs zwischen der im maximalen Arbeitspunkt erzeugbaren elektrischen Leistung und der im Vergleichsarbeitspunkt erzeugbaren elektrischen Leistung, wobei, basierend auf dem Leistungszusammenhang, auf die maximal erzeugbare Abgabenleistung der Photovoltaik-Anlage und damit auf den Verlust durch den gedrosselten Betrieb geschlossen wird, wobei als Leistungszusammenhang der Quotient der im maximalen Arbeitspunkt erzeugbaren elektrischen Leistung zu der im Vergleichsarbeitspunkt erzeugbaren elektrischen Leistung gebildet wird.

11. Verfahren nach Anspruch 10, **dadurch gekennzeichnet, dass** aus der Sonneneinstrahlung erzeugte elektrische Leistung in einem zweistufigen Verfahren in das elektrische Netz (26) eingespeist wird, wobei
- in einer ersten Stufe zeitweise die maximal erzeugbare elektrische Leistung in einen elektrischen Zwischenspeicher eingegeben wird und
- in einer zweiten Stufe eine gedrosselte elektrische Leistung aus dem elektrischen Zwischenspeicher in das elektrische Netz (26) eingespeist wird.

12. Verfahren nach Anspruch 10 oder 11,
**dadurch gekennzeichnet, dass** wenigstens ein Wechselrichter vorgesehen ist, dem elektrische Leistung mittels wenigstens zweier, parallel zueinander geschalteter Leistungssteller, insbesondere sogenannter MPP-Tracker, zugeführt wird, wobei einer der Leistungssteller die Referenzeinheit (28, 30) bildet und zeitweise in seinem maximalen Arbeitspunkt betrieben wird, während wenigstens ein anderer der Leistungssteller in einem gedrosselten Arbeitspunkt betrieben wird.

13. Verfahren nach einem der Ansprüche 10 bis 12,
**dadurch gekennzeichnet, dass**
- die Referenzeinheit (28, 30) wenigstens einen Referenzsolargenerator aufweist, der durch eine Referenzkennlinie (4) charakterisiert ist, und
- die Photovoltaik-Anlage wenigstens einen Hauptsolargenerator (22) aufweist, der durch eine Hauptkennlinie charakterisiert ist, mit einer Nennleistung größer als die Nennleistung des Referenzsolargenerators, wobei
eine Referenzmessung durchgeführt wird, indem der Referenzsolargenerator seine Referenzkennlinie (4) und zeitgleich der Hauptsolargenerator (22) seine Hauptkennlinie durchfährt und hierbei die Referenzkennlinie (4) und die Hauptkennlinie gemessen und in einem Speicher zur weiteren Verwendung hinterlegt werden.

14. Verfahren nach Anspruch 13,
**dadurch gekennzeichnet, dass** die Referenzkennlinie (4) und die Hauptkennlinie jeweils auf einen Kurzschlussstrom und eine Leerlaufspannung normiert werden.

15. Verfahren nach Anspruch 13 oder 14,
**dadurch gekennzeichnet, dass** der Referenzsolargenerator einen Referenzwechselrichter aufweist und aus der Sonneneinstrahlung erzeugte elektrische Leistung als elektrische Versorgungsleistung zum Betreiben des Referenzwechselrichters verwendet wird, insbesondere, dass der Referenzsolargenerator und der Referenzwechselrichter von dem Hauptsolargenerator (22) elektrisch unabhängig arbeiten.

## Claims

1. A photovoltaic system configured to determine a maximally producible output power when the photovoltaic is operated in a curtailed manner in power, wherein
- a reference unit (28, 30) is provided forming part of the photovoltaic system and configured to operate at a maximum operating point of the reference unit (28, 30), where as much electrical power as possible is produced by the reference unit (28, 30) from the present solar radiation,
- the photovoltaic system is configured to be operated in a curtailed operating point, where a curtailed electrical power is produced from the respectively currently present solar radiation and is fed into a power grid (26), wherein the curtailed electrical power is less than a producible electrical power that could be produced at maximum by the photovoltaic system with the respectively currently present solar radiation,
- the reference unit (28, 30) is configured to change the operating point to a curtailed reference operating point of the reference unit (28,30) corresponding to the curtailed operating point of the photovoltaic system,
- the photovoltaic system is configured to determine a power relationship between the producible electrical power in the maximum operating point of the reference unit (28,30) and the producible electrical power in the reference operating point, and
- based on the power relationship conclusion is made to the maximally producible power of the photovoltaic system and accordingly to the loss by the curtailed operation.

2. The photovoltaic system according to claim 1, **characterized in that** the photovoltaic system is configured to determine the power relationship as quotient of the electrical power producible in the maximum operating point and the electrical power producible in the reference operating point.

3. The photovoltaic system according to claim 1 or 2, **characterized in that** the reference unit (28, 30) comprises at least one first inverter (24), and that at least one further inverter is provided, that is temporarily operated at a maximum operating point, while the first inverter (24) is operated in the curtailed reference operating point, wherein optionally further inverters are provided, and in each case one of the inverters is temporarily operated at a maximum operating point, while the remaining inverters are each operated in a curtailed reference operating point.

4. The photovoltaic system according to claim 3, **characterized in that** successively a power relationship and / or the respectively maximally producible electrical power is determined for each inverter, and an overall relationship between the curtailed power and the maximum producible electrical power of the entire photovoltaic is determined preferentially from the power relationships of all inverters and / or the maximally producible electrical power of all inverters.

5. The photovoltaic system according to one of the preceding claims, **characterized by** at least one two-stage inverter, wherein the two-stage inverter operates such that
- a first stage forms the reference unit (28, 30) and temporarily inputs the maximum producible electrical power into an electrical intermediate storage, and
- a second stage is provided feeding a curtailed electrical power from the electrical intermediate storage into the electrical grid (26).

6. The photovoltaic system according to one of the preceding claims, **characterized in that** at least one inverter is provided, to which electrical power is supplied by means of at least two power regulators connected in parallel, in particular so-called MPP tracker, wherein one of the power regulators forms the reference unit (28, 30) and is temporarily operated at the maximum operating point, while at least one other of the power regulators is operated in a curtailed operating point.

7. The photovoltaic system according to one of the preceding claims, **characterized in that**
- the reference unit (28, 30) comprises at least one reference solar generator **characterized by** a reference characteristics (4), and
- the photovoltaic system comprises at least a main solar generator (22) **characterized by** a main characteristics with a nominal power greater than the nominal power of the reference solar generator, wherein
the photovoltaic system is configured to carry out a reference measurement by the reference solar generator passing through its reference characteristics (4) and the main solar generator (22) simultaneously passing through its main characteristics, the reference characteristics (4) and the main characteristics being measured and stored in a memory for further use.

8. The photovoltaic system according to Claim 7, **characterized in that** the reference characteristics (4) and the main characteristics are respectively normalized to a short-circuit current and an open-circuit voltage.

9. The photovoltaic system according to claim 7 or 8, **characterized in that** the reference solar generator comprises a reference inverter and electrical power produced from the solar radiation is used as an electrical supply power for operating the reference inverter, in particular that the reference solar generator and the reference inverter operate electrically independently of the main solar generator (22).

10. A method for determining a maximum output power of a photovoltaic system curtailed in power, comprising the steps of:
- operating the photovoltaic system in a curtailed operating point of the photovoltaic system, in which a curtailed electrical power is produced from solar radiation and fed into an electrical grid (26), which is less than a producible electrical power that would be possible by the photovoltaic system and with the currently present solar radiation,
- operating a part of the photovoltaic system as a reference unit (28, 30) at a maximum operating point of the reference unit (28, 30), in which as much power as possible is produced from the currently present solar radiation,
- changing the operating point of the reference unit (28, 30) into a curtailed reference operating point of the reference unit (28, 30) corresponding to the curtailed operating point of the photovoltaic system,
- determining a power relationship between the electrical power producible at the maximum operating point and the electrical power producible at the reference operating point,
wherein conclusion is made to the maximally producible output power of the photovoltaic system and accordingly to the loss by the curtailed operation based on the power relationship.

11. The method according to claim 10, **characterized in that** electrical power produced from the solar radiation is fed into the electrical grid (26) in a two-stage process, wherein
- in a first stage the maximum electrical power produced is temporarily input into an electrical intermediate storage, and
- in a second stage a curtailed electrical power is fed from the electrical intermediate storage into the electrical grid (26).

12. The method according to claim 10 or 11, **characterized in that** at least one inverter is provided, to which electrical power is supplied by means of at least two power regulators connected in parallel, in particular so-called MPP tracker, wherein one of the power regulators forms the reference unit (28, 30) and is temporarily operated at its maximum operating point, while at least one other of the power controllers is operated in a curtailed operating point.

13. The method according to one of the claims 10 to 12, **characterized in that**
- the reference unit (28, 30) comprises at least one reference solar generator **characterized by** a reference characteristics (4) and
- the photovoltaic system comprises at least one main solar generator (22) which is **characterized by** a main characteristics with a nominal power greater than the nominal power of the reference solar generator, wherein
a reference measurement is carried out by the reference solar generator passing through its reference characteristics (4) and the main solar generator (22) simultaneously passing through its main characteristics, the reference characteristic and the main characteristic being measured and stored in a memory for further use.

14. The method according to claim 13, **characterized in that** the reference characteristics (4) and the main characteristics are respectively normalized to a short-circuit current and an open-circuit voltage.

15. A method according to claim 13 or 14, **characterized in that** the reference solar generator comprises a reference inverter and electrical power produced from the solar radiation is used as an electrical supply power for operating the reference inverter, in particular that the reference solar generator and the reference inverter operate electrically independently of the main solar generator (22).

## Revendications

1. Installation photovoltaïque préparée pour déterminer une puissance de sortie pouvant être produite au maximum lorsque l'installation photovoltaïque est exploitée à puissance réduite, dans laquelle
- une unité de référence (28, 30) est prévue, laquelle forme une partie de l'installation photovoltaïque et est préparée pour l'exploitation en un point de fonctionnement maximal de l'unité de référence (28, 30) où autant de puissance électrique que possible est produite avec l'unité de référence (28, 30) à partir du rayonnement solaire prédominant,
- l'installation photovoltaïque est préparée pour être exploitée en un point de fonctionnement réduit, où une puissance électrique réduite est produite à partir du rayonnement solaire prédominant momentanément respectif et injectée dans un réseau électrique (26), dans laquelle la puissance électrique réduite est inférieure à une puissance électrique pouvait être produite, laquelle pourrait être produite au maximum avec l'installation photovoltaïque et avec le rayonnement solaire prédominant momentanément respectif,
- l'unité de référence (28, 30) est préparée pour modifier son point de fonctionnement en un point de fonctionnement de comparaison réduit de l'unité de référence (28, 30) correspondant au point de fonctionnement réduit de l'installation photovoltaïque,
- l'installation photovoltaïque est étudiée pour déterminer un rapport de puissance entre la puissance électrique pouvant être produite au point de fonctionnement maximal de l'unité de référence (28, 30) et la puissance électrique pouvant être produite au point de fonctionnement de comparaison, et
- sur la base du rapport de puissance, on en déduit la puissance de sortie pouvant être produite au maximum de l'installation photovoltaïque et ainsi, la perte due au fonctionnement réduit.

2. Installation photovoltaïque selon la revendication 1,
**caractérisée en ce que** l'installation photovoltaïque est préparée afin qu'en guise de rapport de puissance, on forme le quotient de la puissance électrique pouvant être produite au point de fonctionnement maximal par la puissance électrique pouvant être produite au point de fonctionnement de comparaison.

3. Installation photovoltaïque selon la revendication 1 ou 2,
**caractérisée en ce que** l'unité de référence (28, 30) comprend au moins un premier onduleur (24) et qu'au moins un autre onduleur est prévu, lequel est exploité par intermittence en un point de fonctionnement maximal pendant que l'on exploite le premier onduleur (24) au point de fonctionnement de comparaison réduit, dans laquelle d'autres onduleurs sont prévus en option et respectivement l'un des onduleurs est exploité par intermittence en un point de fonctionnement maximal pendant que les autres onduleurs sont respectivement exploités en un point de fonctionnement de comparaison réduit.

4. Installation photovoltaïque selon la revendication 3,
**caractérisée en ce que** l'on détermine successivement, pour chaque onduleur, un rapport de puissance et/ou la puissance électrique respective pouvant être générée au maximum, et détermine de préférence à partir des rapports de puissance de tous les onduleurs et/ou à partir des puissances pouvant être produites au maximum de tous les onduleurs, un rapport global entre la puissance électrique réduite et la puissance électrique pouvant être produite au maximum de l'ensemble de l'installation photovoltaïque.

5. Installation photovoltaïque selon l'une des revendications précédentes,
**caractérisée par** au moins un onduleur à deux étages, dans laquelle l'onduleur à deux étages travaille de manière à ce
- qu'un premier étage forme l'unité de référence (28, 30) et fait entrer par intermittence la puissance électrique pouvant être produite au maximum dans un accumulateur électrique intermédiaire et
- qu'un deuxième étage est prévu, lequel alimente le réseau électrique (26) avec une puissance électrique réduite issue de l'accumulateur électrique intermédiaire.

6. Installation photovoltaïque selon l'une des revendications précédentes, **caractérisée en ce qu'**au moins un onduleur est prévu, auquel on amène une puissance électrique au moyen d'au moins deux contrôleurs de puissance montés parallèlement entre eux, en particulier des dénommés trackers MPP, dans laquelle l'un des contrôleurs de puissance forme l'unité de référence (28, 30) et est exploité par intermittence en son point de fonctionnement maximal pendant qu'au moins un autre des contrôleurs de puissance est exploité en un point de fonctionnement réduit.

7. Installation photovoltaïque selon l'une des revendications précédentes, **caractérisée en ce que** :
- l'unité de référence (28, 30) présente au moins un générateur solaire de référence **caractérisé par** une courbe caractéristique de référence (4), et
- l'installation photovoltaïque présente au moins un générateur solaire principal (22) **caractérisé par** une courbe caractéristique principale avec une puissance nominale supérieure à la puissance nominale du générateur solaire de référence, dans laquelle
l'installation photovoltaïque est préparée pour la réalisation d'une mesure de référence **en ce que** le générateur solaire de référence parcoure sa courbe caractéristique de référence (4) et qu'en même temps le générateur solaire principal (22) parcoure sa courbe caractéristique principale et que l'on mesure ce faisant la courbe caractéristique de référence (4) et la courbe caractéristique principale et les stocke dans une mémoire pour l'utilisation ultérieure.

8. Installation photovoltaïque selon la revendication 7,
**caractérisée en ce que** la courbe caractéristique de référence (4) et la courbe caractéristique principale sont respectivement normalisées par rapport à un courant de court-circuit et une tension à vide.

9. Installation photovoltaïque selon la revendication 7 ou 8,
**caractérisée en ce que** le générateur solaire de référence présente un onduleur de référence et qu'une puissance électrique produite à partir du rayonnement solaire est utilisée en tant que puissance d'alimentation électrique pour l'exploitation de l'onduleur de référence, en particulier, que le générateur solaire de référence et l'onduleur de référence fonctionnent électriquement indépendamment du générateur solaire principal (22).

10. Procédé pour déterminer une puissance de sortie pouvant être produite au maximum d'une installation photovoltaïque à puissance réduite comprenant les étapes suivantes :
- l'exploitation de l'installation photovoltaïque en un point de fonctionnement réduit de l'installation photovoltaïque, où une puissance électrique réduite est produite à partir du rayonnement solaire et injectée dans un réseau électrique (26), laquelle est inférieure à une puissance électrique pouvant être produite, laquelle serait possible avec l'installation photovoltaïque et avec le rayonnement solaire prédominant momentanément,
- l'exploitation d'une partie de l'installation photovoltaïque en guise d'unité de référence (28, 30) en un point de fonctionnement maximal de l'unité de référence (28, 30), où autant de puissance électrique que possible est produite à partir du rayonnement solaire prédominant momentanément,
- la modification du point de fonctionnement de l'unité de référence (28, 30) en un point de fonctionnement de comparaison réduit de l'unité de référence (28, 30) correspondant au point de fonctionnement réduit de l'installation photovoltaïque,
- la détermination d'un rapport de puissance entre la puissance électrique pouvant être produite au point de fonctionnement maximal et la puissance électrique pouvant être produite au point de fonctionnement de comparaison,
dans lequel, sur la base du rapport de puissance, on en déduit la puissance de sortie pouvant être produite au maximum de l'installation photovoltaïque et ainsi, la perte due au fonctionnement réduit,
dans lequel, en guise de rapport de puissance, on forme le quotient de la puissance électrique pouvant être produite au point de fonctionnement maximal par la puissance électrique pouvant être produite au point de fonctionnement de comparaison.

11. Procédé selon la revendication 10, **caractérisé en ce que** de la puissance électrique produite à partir du rayonnement solaire est injectée dans le réseau électrique (26) dans un procédé à deux étapes, dans lequel
- dans une première étape, on introduit par intermittence la puissance électrique pouvant être produite au maximum dans un accumulateur électrique intermédiaire, et
- dans une deuxième étape, on alimente le réseau électrique (26) avec une puissance électrique réduite issue de l'accumulateur électrique intermédiaire.

12. Procédé selon la revendication 10 ou 11,
**caractérisé en ce qu'**au moins un onduleur est prévu, auquel on amène une puissance électrique au moyen d'au moins deux contrôleurs de puissance montés parallèlement entre eux, en particulier des dénommés trackers MPP, dans lequel l'un des contrôleurs de puissance forme l'unité de référence (28, 30) et est exploité par intermittence en son point de fonctionnement maximal pendant qu'au moins un autre des contrôleurs de puissance est exploité en un point de fonctionnement réduit.

13. Procédé selon l'une des revendications 10 à 12,
**caractérisé en ce que** :
- l'unité de référence (28, 30) présente au moins un générateur solaire de référence **caractérisé par** une courbe caractéristique de référence (4), et
- l'installation photovoltaïque présente au moins un générateur solaire principal (22) **caractérisé par** une courbe caractéristique principale avec une puissance nominale supérieure à la puissance nominale du générateur solaire de référence, dans lequel
une mesure de référence est réalisée **en ce que** le générateur solaire de référence parcoure sa courbe caractéristique de référence (4) et qu'en même temps le générateur solaire principal (22) parcoure sa courbe caractéristique principale et que l'on mesure ce faisant la courbe caractéristique de référence (4) et la courbe caractéristique principale et les stocke dans une mémoire pour le traitement ultérieur.

14. Procédé selon la revendication 13,
**caractérisé en ce que** la courbe caractéristique de référence (4) et la courbe caractéristique principale sont respectivement normalisées par rapport à un courant de court-circuit et une tension à vide.

15. Procédé selon la revendication 13 ou 14,
**caractérisé en ce que** le générateur solaire de référence présente un onduleur de référence et qu'une puissance électrique produite à partir du rayonnement solaire est utilisée en tant que puissance d'alimentation électrique pour l'exploitation de l'onduleur de référence, en particulier, **en ce que** le générateur solaire de référence et l'onduleur de référence fonctionnent électriquement indépendamment du générateur solaire principal (22).
